# EUROPÄISCHE PATENTANMELDUNG

(11) **EP 4 646 917 A1**
(43) Veröffentlichungstag der Anmeldung: **12.11.2025**
(21) Anmeldenummer: 25173706.0
(22) Anmeldetag: 30.04.2025
(51) Int. Cl.: A01D 78/10, A01D 80/02

(54) **RECHKREISEL EINER HEUWERBUNGSMASCHINE**

(30) Priorität: 07.05.2024 DE 102024112853
(71) Anmelder: CLAAS Saulgau GmbH, 88348 Bad Saulgau (DE)
(72) Erfinder: Kesenheimer, Linus, 88374 Hosskirch (DE); Schmitt, Mathias, 78576 Emmingen-Liptingen (DE)

(57) **Zusammenfassung**

Rechkreisel (10) einer Heuwerbungsmaschine (11), mit einem Flanschdeckel (12), mit mehreren am Flanschdeckel (12) angreifenden Zinkenarmen (13), wobei jeder Zinkenarm (13) einen ersten, radial inneren Abschnitt (13a) und einen gegenüber dem ersten Abschnitt (13a) abgewinkelten zweiten, radial äußeren Abschnitt (13b) aufweist, mit an den zweiten Abschnitten (13b) der Zinkenarme (13) angreifenden Rechzinken (17), wobei jeder Rechzinken (17) einen ersten, in Drehrichtung des Rechkreisels (10) vorlaufenden Federschenkel (18) und einen zweiten, in Drehrichtung des Rechkreisels (10) nachlaufenden Federschenkel (19) aufweist. Eine Längsmittelachse (20) des ersten Abschnitts (13a) des jeweiligen Zinkenarms (13) und eine Längsmittelachse (21) des zweiten Abschnitts (13b) des jeweiligen Zinkenarms (13) schließen einen Winkel (α) zwischen 10° und 20° ein. Der der nachlaufende Federschenkel (19) ist um 20 mm bis 30 mm kürzer als der vorlaufende Federschenkel (18) des jeweiligen Rechzinkens (13). In Blickrichtung der Längsmittelachse (21) des zweiten Abschnitts (13b) des jeweiligen Zinkenarms (13) gesehen sind der nachlaufende Federschenkel (19) und der vorlaufende Federschenkel (18) des jeweiligen Rechzinkens (13) zwischen 10 mm und 20 mm zueinander versetzt.

## Beschreibung

Die Erfindung betrifft einen Rechkreisel einer Heuwerbungsmaschine nach dem Oberbegriff des Anspruchs 1.

Aus der Praxis sind Heuwerbungsmaschinen hinlänglich bekannt. So sind als Schwader sowie als Wender ausgebildete Heuwerbungsmaschinen bekannt.

EP 2 399 446 B1 offenbart eine Heuwerbungsmaschine mit mehreren Rechkreiseln. Der jeweilige Rechkreisel weist einen Flanschdeckel und mehrere am Flanschdeckel angreifende Zinkenarme auf. An den Zinkenarmen sind als Doppelrechzinken ausgebildete Rechzinken befestigt, wobei jeder Rechzinken einen ersten Federschenkel und einen zweiten Federschenkel aufweist. Einer der Federschenkel stellt einen in Drehrichtung des Rechkreisels vorlaufenden Federschenkel und ein anderer Federschenkel einen in Drehrichtung des Rechkreisels nachlaufenden Federschenkel bereit.

Die Rechzinken des Rechkreisels nehmen Erntegut vom Untergrund bzw. Boden auf und legen dasselbe wieder ab. Bei Wendern wird das Erntegut beim Ablegen verteilt. Obwohl aus dem Stand der Technik bekannte Rechkreisel Erntegut bereits mit hoher Qualität aufnehmen und wieder abgeben können, besteht Bedarf an einem Rechkreisel, der einerseits hinsichtlich seines Aufnahmeverhaltens und Abgabeverhaltens für das Erntegut verbesserte Eigenschaften aufweist und andererseits eine geringere Gefahr von Zinkenbrüchen und eine geringere Gefahr einer Verschmutzung durch eigenes Zuwerfen mit Erntegut aufweist.

Aufgabe der Erfindung ist es, einen entsprechenden Rechkreisel einer Heuwerbungsmaschine bereitzustellen. Diese Aufgabe wird durch einen Rechkreisel einer Heuwerbungsmaschine nach Anspruch 1 gelöst.

Erfindungsgemäß schließen eine Längsmittelachse des ersten Abschnitts und eine Längsmittelachse des zweiten Abschnitts des jeweiligen Zinkenarms einen Winkel zwischen 10° und 20° ein.

Der nachlaufende Federschenkel des jeweiligen Rechzinkens ist erfindungsgemäß um 20 mm bis 30 mm kürzer als der vorlaufende Federschenkel des jeweiligen Rechzinkens.

In Blickrichtung der Längsmittelachse des zweiten Abschnitts des jeweiligen Zinkenarms gesehen sind der nachlaufende Federschenkel und der vorlaufende Federschenkel des jeweiligen Rechzinkens erfindungsgemäß zwischen 10 mm und 20 mm zueinander versetzt.

Die obigen drei geometrischen Parameter stellen in Kombination ein verbessertes Aufnahmeverhalten und Abgabeverhalten für Erntegut bereit, und zwar bei gleichzeitig reduzierter Gefahr von Zinkenbrüchen und gleichzeitig reduzierter Gefahr eines eigenen Zuwerfens mit Erntegut und damit einer Verschmutzung einer den Rechkreisel aufweisenden Heuwerbungsmaschine.

Vorzugsweise schließen eine Flanschdeckelebene des Flanschdeckels des Rechkreisels und die Längsmittelachse des vorlaufenden Federschenkels des den geringsten Abstand zum zu bearbeitenden Untergrund aufweisenden Rechzinkens einen Winkel zwischen 50° und 70° ein. Durch diesen geometrischen Parameter können die oben genannten Eigenschaften weiter verbessert werden, nämlich ein weiter verbessertes Aufnahmeverhaltens und Abgabeverhaltens für Erntegut, die weitere Reduzierung der Gefahr von Zinkenbrüchen und die weitere Reduzierung der Gefahr eines Verschmutzens der den Rechkreisel aufweisenden Heuwerbungsmaschine durch eigenes Zuwerfen von Erntegut gewährleistet werden.

Vorzugsweise sind die Längsmittelachse des ersten Abschnitts des jeweiligen Zinkenarms und eine Spitze oder ein Ende des nachlaufenden Federschenkels zwischen 60 mm und 110 mm zueinander versetzt. Auch durch diesen geometrischen Parameter können die oben genannten Eigenschaften weiter verbessert werden, nämlich ein weiter verbessertes Aufnahmeverhaltens und Abgabeverhaltens für Erntegut, die weitere Reduzierung der Gefahr von Zinkenbrüchen und die weitere Reduzierung der Gefahr eines Verschmutzens der den Rechkreisel aufweisenden Heuwerbungsmaschine durch eigenes Zuwerfen von Erntegut gewährleistet werden.

Vorzugsweise schließen die Längsmittelachse des ersten Abschnitts des jeweiligen Zinkenarms und eine Gerade, die sich durch die Spitze oder das Ende des nachlaufenden Federschenkels und die Spitze oder das Ende des vorlaufenden Federschenkels des am jeweiligen Zinkenarm angreifenden Rechzinkens erstreckt, einen Winkel zwischen 5° und 12° ein. Auch dies erlaubt eine weitere Verbesserung der oben genannten Eigenschaften, nämlich eines weiter verbesserten Aufnahmeverhaltens und Abgabeverhaltens für Erntegut, der weiteren Reduzierung der Gefahr von Zinkenbrüchen und der weiteren Reduzierung der Gefahr eines Verschmutzens der den Rechkreisel aufweisenden Heuwerbungsmaschine durch eigenes Zuwerfen von Erntegut.

Bevorzugte Weiterbildungen der Erfindung ergeben sich aus den Unteransprüchen und der nachfolgenden Beschreibung.

Ausführungsbeispiele der Erfindung werden, ohne hierauf beschränkt zu sein, anhand der Zeichnung näher erläutert. Dabei zeigt:
- Fig. 1: eine Seitenansicht eines Details erfindungsgemäßen Rechkreisels einer Heuwerbungsmaschine,
- Fig. 2: eine perspektivische Ansicht des erfindungsgemäßen Rechkreisels einer Heuwerbungsmaschine,
- Fig. 3: eine Draufsicht auf Fig. 1,
- Fig. 4: eine erste Seitenansicht auf einen Rechzinken,
- Fig. 5: eine zweite, gegenüber Fig. 1 um 90° gedrehte Seitenansicht auf einen Rechzinken.

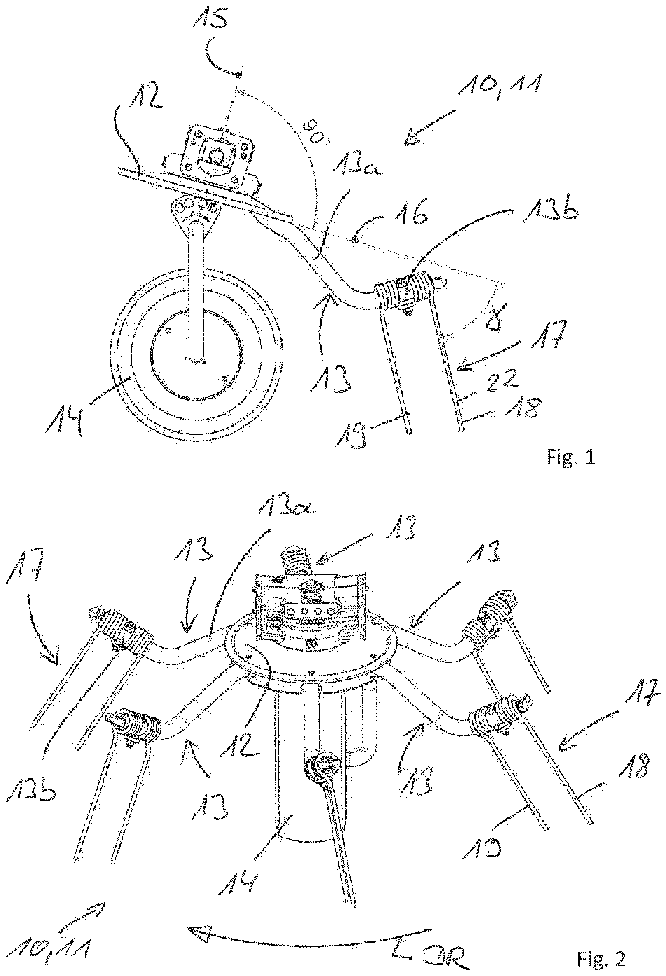

Fig. 1 zeigt einen Ausschnitt aus einem Rechkreisel 10 einer als Wender ausgebildeten Heuwerbungsmaschine 11. Vom Rechkreisel 10 sind ein Flanschdeckel 12 sowie ein am Flanschdeckel 12 angreifender Zinkenarm 13 gezeigt.

Über den Umfang des Flanschdeckels 12 greifen gemäß Fig. 2 mehrere derartige Zinkenarme 13 am Flanschdeckel 12 an, und zwar in Umfangsrichtung des Flanschdeckels 12 gesehen vorzugsweise gleichverteilt.

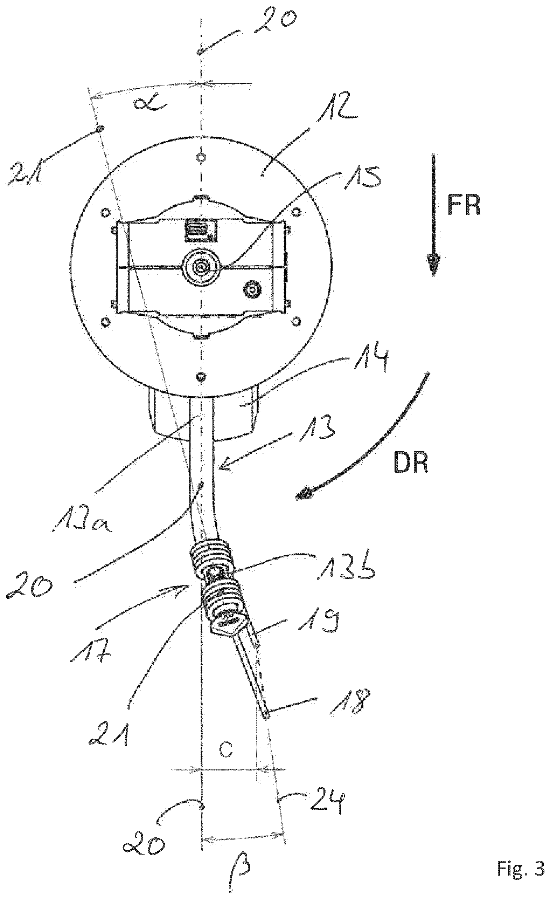

Im Betrieb stützt sich der Rechkreisel 11 über ein Rad 14 auf einem zu bearbeitenden Untergrund, von welchem Erntegut aufgenommen und in Richtung dessen das Erntegut wieder abgegeben werden soll, ab. Im Betrieb ist der Flanschdeckel 12 zusammen mit den am Flanschdeckel 12 angreifenden Zinkenarmen 13 um eine Drehachse 15 in einer Drehrichtung DR des Rechkreisels 11 drehend bzw. rotatorisch antreibbar. Diese Drehachse 15 schließt dabei mit einer Flanschdeckelebene 16 einen Winkel von vorzugsweise 90° ein. Die Fortbewegungsrichtung FR des Rechkreisel 11 im Betrieb ist in Fig. 3 gezeigt.

Jeder am Flanschdeckel 12 angreifende Zinkenarm 13 weist einen ersten, radial inneren Abschnitt 13a und einen gegenüber dem ersten Abschnitt 13a abgewinkelten zweiten, radial äußeren Abschnitt 13b auf. An dem zweiten Abschnitt 13b des jeweiligen Zinkenarms 13 des Rechkreisels 10 greifen Rechzinken 17 an, die vorzugsweise als Doppelrechzinken ausgebildet sind.

Jeder Rechzinken 17 verfügt über einen in Drehrichtung DR des Rechkreisels 10 ersten, vorlaufenden Federschenkel 18 und einen zweiten, in Drehrichtung DR des Rechkreisels 10 nachlaufenden zweiten Federschenkel 19 auf.

Erfindungsgemäß schließen eine Längsmittelachse 20 des ersten Abschnitts 13a des jeweiligen Zinkenarms 13 und eine Längsmittelachse 21 des zweiten Abschnitts 13b des jeweiligen Zinkenarms 13 einen Winkel α zwischen 10° und 20° ein.

Bevorzugt beträgt dieser Winkel α zwischen 11° und 18°.

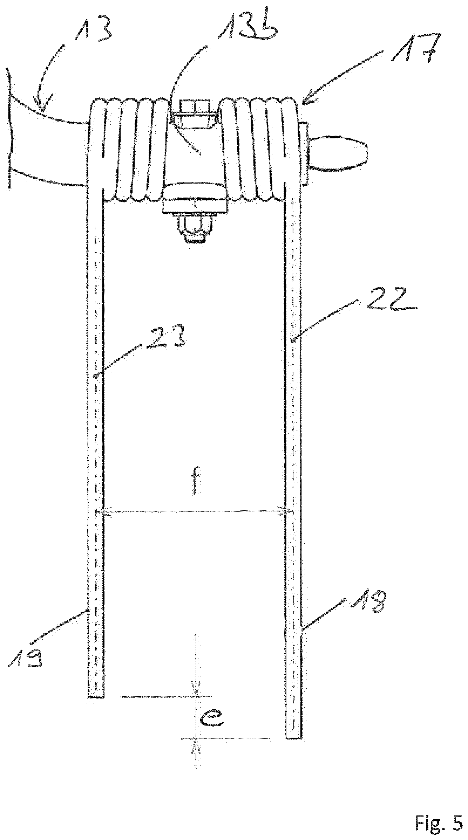

Ferner ist erfindungsgemäß vorgesehen, dass der in Drehrichtung DR nachlaufende Federschenkel 18 des jeweiligen Rechzinkens 17 um das Maß e, welches zwischen 20 mm und 30 mm beträgt, kürzer als der in Drehrichtung DR vorlaufende Federschenkel 18 des jeweiligen Rechzinkens 17 ist. Wie am besten Fig. 5 entnommen werden kann, ist der nachlaufende Federschenkel 19 weiter radial innen positioniert als der vorlaufende Federschenkel 18.

Bevorzugt ist der nachlaufende Federschenkel 19 des jeweiligen Rechzinkens 17 um 22 mm bis 27 mm kürzer als der vorlaufende Federschenkel 18 des jeweiligen Rechzinkens 17.

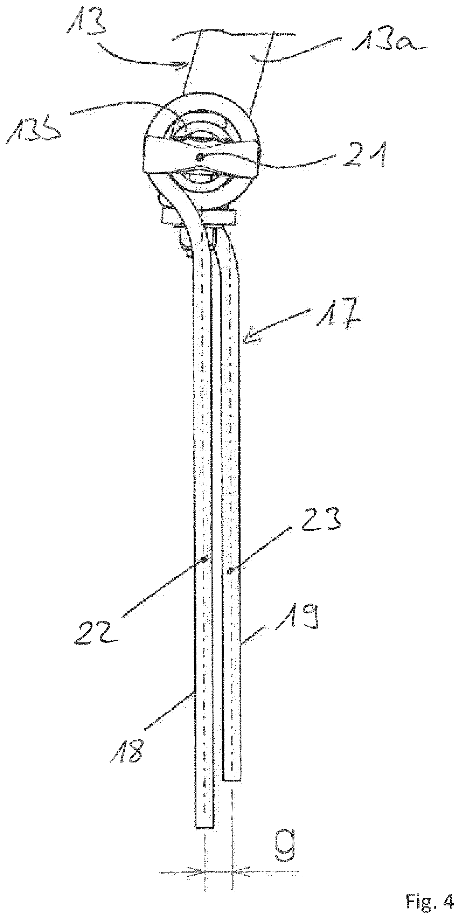

Ferner ist erfindungsgemäß vorgesehen, dass in Blickrichtung der Längsmittelachse 21 des zweiten Abschnitts 13b des jeweiligen Zinkenarms 13 gesehen, die sich in Fig. 4 senkrecht zur Zeichenebene erstreckt, der in Drehrichtung DR nachlaufende Federschenkel 19 und der in Drehrichtung DR vorlaufende Federschenkel 18 des jeweiligen Rechzinkens 17 um das Maß g zueinander versetzt sind, welches zwischen 10 mm und 20 mm beträgt.

Das Maß g bezieht sich dabei auf den Versatz zwischen Längsmittelachsen 22, 23 der oben genannten Federschenkel 18, 19.

Bevorzugt sind in Blickrichtung der Längsmittelachse 21 des zweiten Abschnitts 13b des jeweiligen Zinkenarms 13 gesehen der in Drehrichtung DR nachlaufende Federschenkel 19 und der in Drehrichtung DR vorlaufende Federschenkel 18 des jeweiligen Rechzinkens 17 zwischen 11 mm und 18 mm zueinander versetzt.

Die oben genannten drei geometrischen Parameter, nämlich der Winkel α und die geometrischen Kenngrößen e und g, erlauben in Kombination miteinander ein verbessertes Aufnahmeverhalten und verbessertes Abgabeverhalten eines Rechkreisels 10 bei reduzierter Gefahr von Zinkenbrüchen und bei reduzierter Gefahr einer Verschmutzung der den Rechkreisel 10 aufweisenden Heuwerbungsmaschine 11, nämlich bei gleichzeitiger Reduktion des eigenen Zuwerfens der Heuwerbungsmaschine 11.

Nach einer vorteilhaften Weiterbildung der Erfindung ist vorgesehen, dass die Flanschdeckelebene 16 des Flanschdeckels 12 des Rechkreisels 10 und die Längsmittelachse 20 des in Drehrichtung DR vorlaufenden Federschenkels 18 des den im Betrieb geringsten Abstands zum zu bearbeitenden Untergrund aufweisenden Rechzinkens 17 einen Winkel γ zwischen 50° und 70° ein.

Bevorzugt beträgt dieser Winkel γ zwischen 55° und 65°.

Mit diesem Winkel γ kann in Kombination mit den geometrischen Parametern α, e und g das Aufnahmeverhalten und Abgabeverhalten des Rechkreisels für Erntegut bei gleichzeitig weiter reduzierter Gefahr eines Zinkenbruchs und gleichzeitig weiter reduzierter Verschmutzungsgefahr weiter verbessert werden.

Nach einer vorteilhaften Weiterbildung der Erfindung ist vorgesehen, dass die Längsmittelachse 20 des ersten Abschnitts 13a des jeweiligen Zinkenarms 13 und eine Spitze oder ein Ende des nachlaufenden Federschenkels 19 um das Maß c zueinander versetzt sind, welches zwischen 60 mm und 110 mm beträgt.

Bevorzugt sind die Längsmittelachse 20 des ersten Abschnitts 13a des jeweiligen Zinkenarms 13 und die Spitze oder das Ende des nachlaufenden Federschenkels 19 des am jeweiligen Zinkenarm montierten Rechzinkens 17 zwischen 65 mm und 100 mm zueinander versetzt.

Das geometrische Maß c kann alternativ oder in Kombination mit dem geometrischen Maß γ zur Weiterbildung der Erfindung genutzt werden. Mit dem geometrischen Maß c kann das Aufnahmeverhalten und Abgabeverhalten des Rechkreisels 10 für Erntegut bei gleichzeitig weiter reduzierter Gefahr eines Zinkenbruchs und gleichzeitig weiter reduzierter Verschmutzungsgefahr weiter verbessert werden.

Nach einer Weiterbildung des erfindungsgemäßen Rechkreisels 10 schließen die Längsmittelachse 20 des ersten Abschnitts 13a des jeweiligen Zinkenarms 13 und eine Gerade 24, die sich durch die Enden des in Drehrichtung DR nachlaufenden Federschenkels 19 und des in Drehrichtung DR vorlaufenden Federschenkels 18 des jeweiligen am Zinkenarm 13 befestigten Rechzinkens 17 erstrecken, einen Winkel β zwischen 5° und 12° ein.

Bevorzugt beträgt dieser Winkel β zwischen 6° und 11°.

Der Winkel β kann in Kombination mit dem Maß c und/oder mit dem Winkel γ zur Weiterbildung der Erfindung genutzt werden. Mit dem Winkel β kann das Aufnahmeverhalten und Abgabeverhalten des Rechkreisels 10 für Erntegut bei gleichzeitig weiter reduzierter Gefahr eines Zinkenbruchs und gleichzeitig weiter reduzierter Verschmutzungsgefahr weiter verbessert werden.

Die Erfindung erlaubt ein besonders vorteilhaftes Aufnehmen und Abgeben von Erntegut, wie zum Beispiel Heu, durch den erfindungsgemäßen Rechkreisel 10 einer Heuwerbungsmaschine 11.

Gleichzeitig wird ein guter Schutz vor Zinkenbrüchen gewährleistet, ferner eine reduzierte Gefahr einer Verschmutzung der Heuwerbungsmaschine durch eigenes Zuwerfen mit Erntegut.

Bei der Heuwerbungsmaschine 11 handelt es sich insbesondere um einen Wender.

### Bezugszeichenliste

- 10: Rechkreisel
- 11: Heuwerbungsmaschine
- 12: Flanschdeckel
- 13: Zinkenarm
- 13a: Abschnitt
- 13b: Abschnitt
- 14: Rad
- 15: Drehachse
- 16: Flanschdeckelebene
- 17: Rechzinken
- 18: Federschenkel
- 19: Federschenkel
- 20: Längsmittelachse
- 21: Längsmittelachse
- 22: Längsmittelachse
- 23: Längsmittelachse
- 24: Gerade

## Patentansprüche

1. Rechkreisel (10) einer Heuwerbungsmaschine (11),
mit einem Flanschdeckel (12),
mit mehreren am Flanschdeckel (12) angreifenden Zinkenarmen (13), wobei jeder Zinkenarm (13) einen ersten, radial inneren Abschnitt (13a) und einen gegenüber dem ersten Abschnitt (13a) abgewinkelten zweiten, radial äußeren Abschnitt (13b) aufweist,
mit an den zweiten Abschnitten (13b) der Zinkenarme (13) angreifenden Rechzinken (17), wobei jeder Rechzinken (17) einen ersten, in Drehrichtung des Rechkreisels (10) vorlaufenden Federschenkel (18) und einen zweiten, in Drehrichtung des Rechkreisels (10) nachlaufenden Federschenkel (19) aufweist,
**dadurch gekennzeichnet, dass**
eine Längsmittelachse (20) des ersten Abschnitts (13a) des jeweiligen Zinkenarms (13) und eine Längsmittelachse (21) des zweiten Abschnitts (13b) des jeweiligen Zinkenarms (13) einen Winkel (α) zwischen 10° und 20° einschließen,
der nachlaufende Federschenkel (19) um 20 mm bis 30 mm kürzer als der vorlaufende Federschenkel (18) des jeweiligen Rechzinkens (13) ist,
in Blickrichtung der Längsmittelachse (21) des zweiten Abschnitts (13b) des jeweiligen Zinkenarms (13) gesehen der nachlaufende Federschenkel (19) und der vorlaufende Federschenkel (18) des jeweiligen Rechzinkens (13) zwischen 10 mm und 20 mm zueinander versetzt sind.

2. Rechkreisel (10) nach Anspruch 1, **dadurch gekennzeichnet, dass** die Längsmittelachse (20) des ersten Abschnitts (13b) des jeweiligen Zinkenarms (13) und die Längsmittelachse (21) des zweiten Abschnitts (13b) des jeweiligen Zinkenarms (13) einen Winkel (α) zwischen 11° und 18° einschließen.

3. Rechkreisel (10) nach Anspruch 1 oder 2, **dadurch gekennzeichnet, dass** der nachlaufende Federschenkel (19) um 22 mm bis 27 mm kürzer als der vorlaufende Federschenkel (18) des jeweiligen Rechzinkens (17) ist.

4. Rechkreisel (10) nach Anspruch 1, 2 oder 3, **dadurch gekennzeichnet, dass** in Blickrichtung der Längsmittelachse (21) des zweiten Abschnitts (13b) des jeweiligen Zinkenarms (13) gesehen der nachlaufende Federschenkel (19) und der vorlaufende Federschenkel (28) des jeweiligen Rechzinkens (17) zwischen 11 mm und 18 mm zueinander versetzt sind.

5. Rechkreisel (10) nach einem der Ansprüche 1 bis 4, **dadurch gekennzeichnet, dass** eine Flanschdeckelebene (16) des Flanschdeckels (12) des Rechkreisels und die Längsmittelachse (22) des vorlaufenden Federschenkels (18) des den geringsten Abstand zum zu bearbeitenden Untergrund aufweisenden Rechzinkens (17) einen Winkel (γ) zwischen 50° und 70° einschließen.

6. Rechkreisel (10) nach Anspruch 5, **dadurch gekennzeichnet, dass** die Flanschdeckelebene (16) des Rechkreisels mit der Längsmittelachse (22) des vorlaufenden Federschenkels (18) des den geringsten Abstand zum zu bearbeitenden Untergrund aufweisenden Rechzinkens (17) einen Winkel (γ) zwischen 55° und 65° einschließt.

7. Rechkreisel (10) nach einem der Ansprüche 1 bis 6, **dadurch gekennzeichnet, dass** die Längsmittelachse (20) des ersten Abschnitts (13a) des jeweiligen Zinkenarms (13) und eine Spitze oder ein Ende des nachlaufenden Federschenkels (19) zwischen 60 mm und 110 mm zueinander versetzt sind.

8. Rechkreisel (10) nach Anspruch 7, **dadurch gekennzeichnet, dass** die Längsmittelachse (20) des ersten Abschnitts (13a) des jeweiligen Zinkenarms 13 und die Spitze oder das Ende des nachlaufenden Federschenkels (19) zwischen 65 mm und 100 mm zueinander versetzt sind.

9. Rechkreisel (10) nach einem der Ansprüche 1 bis 8, **dadurch gekennzeichnet, dass** die Längsmittelachse (20) des ersten Abschnitts (13a) des jeweiligen Zinkenarms (13) und eine Gerade (24), die sich durch die Spitze oder das Ende des nachlaufenden Federschenkels (19) und die Spitze oder das Ende des vorlaufenden Federschenkels (18) erstreckt, einen Winkel (β) zwischen 5° und 12° einschließen.

10. Rechkreisel (10) nach Anspruch 9, **dadurch gekennzeichnet, dass** die Längsmittelachse (20) des ersten Abschnitts (13a) des jeweiligen Zinkenarms (13) und die Gerade (24), die sich durch die Spitze oder das Ende des nachlaufenden Federschenkels (19) und die Spitze oder das Ende des vorlaufenden Federschenkels (18) erstreckt, einen Winkel (β) zwischen 6° und 11 ° einschließen.
